# EUROPÄISCHE PATENTANMELDUNG

(11) **EP 1 050 727 A1**
(43) Veröffentlichungstag der Anmeldung: **08.11.2000**
(21) Anmeldenummer: 99108962.4
(22) Anmeldetag: 06.05.1999
(51) Int. Cl.: F25B 49/02, F25B 41/06, F25B 5/02

(54) **Verfahren und Einrichtung zur Regelung eines thermodynamischen Kreisprozesses**

(71) Anmelder: Siemens Building Technologies AG, 6300 Zug (CH)
(72) Erfinder: Damsgaard, Erik, 6318 Walchwil (CH)

(57) **Zusammenfassung**

Mit einem Regelverfahren für eine Kältemaschine (1) oder eine Wärmepumpe (1) mit einem Verfahrensschritt, in welchem am Verdampfer (5) wenigstens eine Prozessgrösse gemessen und mit Hilfe der Prozessgrösse ein erstes Stellsignal S1 für das Ventil (4) generiert wird, und einen weiteren Verfahrensschritt, in welchem ein zweites Stellsignal S2 zur Veränderung des Druckes oder der Temperatur im Verflüssiger (3) generiert wird und zur Generierung des zweiten Stellsignals S2 das erste Stellsignal S verwendet wird, ist der Wirkungsgrad COP der Kältemaschine (1) oder der Wärmepumpe (1) auch dann optimierbar, wenn Störungen wie beispielsweise Laständerungen der Nutzprozesse oder Veränderungen der Förderleistung des Verdichters (2) auftreten.

## Beschreibung

Die Erfindung bezieht sich auf ein Verfahren und eine Einrichtung zur Regelung eines thermodynamischen Kreisprozesses gemäss den Oberbegriffen der Ansprüche 1, 9 und 10.

Solche Verfahren werden vorteilhaft in Kältemaschinen oder in Wärmepumpen verwendet.

Es ist bekannt (Recknagel et al: Taschenbuch für Heizung und Klimatechnik, 1999 R. Oldenburg Verlag München), in thermodynamischen Kreisprozessen einer Kältemaschine oder in einer Wärmepumpe ein elektronisches Expansionsventil einzusetzen und dabei die Differenz zwischen der Sättigungstemperatur des Kältemittels und der aktuellen Überhitzungstemperatur oder Gastemperatur zu regeln, wobei die besagte Differenz in der Literatur auch als Überhitzung bezeichnet wird. Aus der gleichen Quelle ist auch bekannt, in thermodynamischen Kreisprozessen mit überfluteten Verdampfern die Öffnung eines Ventils derart zu verstellen, dass sich im Verdampfer ein im wesentlichen konstanter Pegel einstellt.

Es ist ein Verfahren der im Oberbegriff des Anspruchs 1 genannten Art bekannt (EP 0 784 776 B1), bei dem einem PID-Regler nebst dem Ausgangssignal eines Vergleichers zusätzlich ein der Verdampfungstemperatur des Wärmeträgers proportionales Signal zugeführt wird.

Es ist auch bekannt (US 5 867 995), bei derartigen Kreisprozessen eine Regeleinrichtung einzusetzen, bei welcher der am Ausgang des Verdampfers herrschende Saugdruck geregelt wird. Im weiteren ist aus US 5 867 998 eine Regeleinrichtung für ein elektronisches Expansionsventil einer Kühlmaschine bekannt.

Bekannte Verfahren zur Regelung von Prozessgrössen in einem thermodynamischen Kreisprozess haben den Nachteil, dass beim Einwirken von Störgrössen der erreichbare Wirkungsgrad, der im Zusammenhang mit Kältemaschinen und Wärmepumpen auch unter der Bezeichnung COP (Coefficient Of Performance) definiert ist, nicht optimal ist. In der Literatur (Recknagel et al: Taschenbuch für Heizung und Klimatechnik, 1999 R. Oldenburg Verlag München, Seite 1778) ist der Wirkungsgrad COP als Verhältnis zwischen der Nutzleistung und der Leistungsaufnahme definiert.

Der Erfindung liegt die Aufgabe zugrunde, ein Verfahren zur Regelung von Prozessgrössen in einem thermodynamischen Kreisprozess anzugeben, bei dem der Wirkungsgrad COP auch beim Einwirken von Störgrössen optimiert wird. Im weiteren soll auch eine Einrichtung geschaffen werden, mit der das Verfahren durchführbar ist.

Die genannte Aufgabe wird erfindungsgemäss durch die Merkmale der Ansprüche 1, 9 und 10 gelöst. Vorteilhafte Ausgestaltungen ergeben sich aus den abhängigen Ansprüchen.

Nachfolgend werden Ausführungsbeispiele der Erfindung anhand der Zeichnung näher erläutert, wobei gleiche Bezugszeichen auf gleiche Mittel oder Grössen hinweisen.

Es zeigen:
- Fig. 1: ein Prinzip-Schema eines thermodynamischen Kreisprozesses mit einer Regeleinrichtung,
- Fig. 2: eine Variante der Regeleinrichtung, und
- Fig. 3: ein Schema einer Anlage mit mehreren Verdampfern und einer weiteren Variante der Regeleinrichtung.

Zur Realisierung eines derartigen thermodynamischen Kreisprozesses gibt es verschiedene bekannte Verfahren, die teilweise auf unterschiedlichen physikalischen Vorgängen beruhen. So werden grundsätzlich auch Kompressions- und Absorptionsprozesse unterschieden. Gebräuchliche Kompressionsprozesse unter Zufuhr mechanischer Energie sind beispielsweise:
- Dampf-Prozesse mit Energieträgern, die bei den Arbeitstemperaturen den Aggregatzustand zwischen Dampfphase und Flüssigphase ändern,
- Luft-Prozesse mit Luft als Energieträger, ohne Aggregatzustandsänderung, und
- Dampfstrahl-Prozesse, zum Beispiel mit Wasserdampf als Treibmittel und Wasser als Energieträger.

Bei den unten beschriebenen Ausführungsbeispielen handelt es sich um Kompressionsprozesse, bei denen mittels Verdichter Energie zugeführt wird. Es versteht sich von selbst, dass das beschriebene Verfahren grundsätzlich auch bei Absorptionsprozessen anwendbar ist.

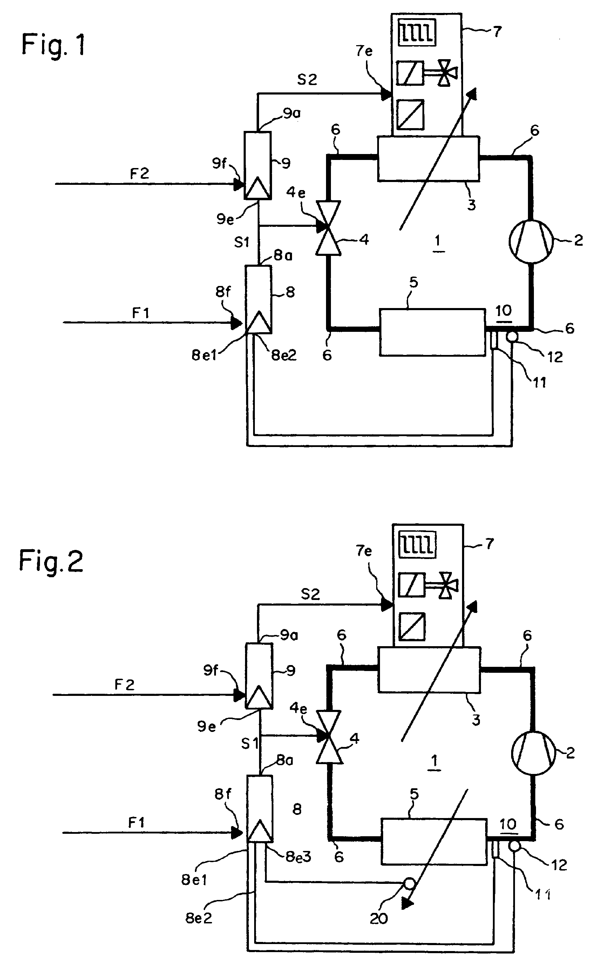

In der Fig. 1 bezeichnet 1 eine Anlage zur Durchführung eines thermodynamischen Kreisprozesses, wobei die Anlage 1 je nach dem gewünschten Nutzeffekt als Kälteanlage oder als Wärmepumpe bezeichnet wird. Die Anlage 1 ist eine Kälteanlage, wenn die bei der niedrigen Temperatur entzogene Wärmemenge, die sogenannte Kälteleistung, der gewünschte Nutzen ist. Im Gegensatz dazu ist die Anlage 1 eine Wärmepumpe, wenn die bei der höheren Temperatur abgegebene Wärmemenge, die sogenannte Wärmeabgabe, der gewünschte Nutzen ist. Die Anlage 1 wird auch dann als Wärmepumpe bezeichnet, wenn beide Wärmemengen ganz oder teilweise Nutzleistung sind.

Die Anlage 1 weist einen Verdichter 2, einen Verflüssiger 3, ein Ventil 4 und einen Verdampfer 5 auf, wobei der Verdichter 2, der Verflüssiger 3, das Ventil 4 und der Verdampfer 5 in der aufgezählten Reihenfolge hintereinander geschaltet sind und von einem Energieträger 6 durchströmt werden. Der Energieträger 6 bildet mit dem Verdichter 2, dem Verflüssiger 3, dem Ventil 4 und dem Verdampfer 5 einen Energieträgerkreis 2, 3, 4, 5, 6.

Die Funktion des Verflüssigers 3 ist durch eine Steuereinrichtung 7 steuerbar, wobei durch die Steuereinrichtung 7 der Druck oder die Temperatur im Verflüssiger 3 gesteuert werden kann. Die Steuereinrichtung 7 ist vorteilhafterweise eine Kühleinrichtung, deren Kühlleistung veränderbar ist, also beispielsweise ein Ventilator, eine Ventilatorgruppe, ein Röhrenkessel, ein Rohrbündel oder allgemein ein Wärmetauscher.

Eine Regeleinrichtung zur Regelung von Prozessgrössen in der Anlage 1 weist ein erstes Modul 8 und ein zweites Modul 9 auf, wobei ein Ausgang 8a des ersten Moduls 8 für ein erstes Stellsignal S1 einerseits mit einem Steuereingang 4e des Ventils 4 und anderseits mit einem ersten Eingang 9e des zweiten Moduls 9 verbunden ist. Ein Ausgang 9a des zweiten Moduls 9 für ein zweites Stellsignal S2 ist mit einem Steuereingang 7e der Steuereinrichtung 7 verbunden. Durch das erste Stellsignal S1 ist der Energieträger-Durchlass des Ventils 4 steuerbar. Der Druck oder die Temperatur im Verflüssiger 3 ist durch das zweite Stellsignal S2 steuerbar.

Über den Steuereingang 4e des Ventils 4 ist der Energieträger-Durchlass oder der Volumenstrom pro Zeiteinheit steuerbar, indem je nach Ausführung des Ventils, beispielsweise eine Öffnung des Ventils verändert wird oder ein Zeit-Verhältnis zwischen zwei Ventilzuständen "offen" und "geschlossen" bei Pulsbetrieb des Ventils 4 variiert wird.

Das erste Modul 8 ist eingangsseitig mit einer Messeinrichtung 10 verbunden, durch welche wenigstens eine Prozessgrösse am Verdampfer 5 erfassbar ist. Die Messeinrichtung 10 ist auf die Art des in der Anlage 1 ablaufenden thermodynamischen Prozesses abgestimmt.

Wird im thermodynamische Prozess beispielsweise mit trockener Verdampfung gearbeitet, werden durch die Messeinrichtung 10 mit Vorteil Prozessgrössen erfasst, mit denen die sogenannte Überhitzung ermittelt werden kann. Die sogenannte Überhitzungstemperatur oder aktuelle Gastemperatur wird durch einen Temperatursensor gemessen, die Sättigungstemperatur entweder durch einen weiteren Temperatursensor oder durch einen Drucksensor aus dessen Signal die Sättigungstemperatur berechnet wird. Die Differenz zwischen der Sättigungstemperatur des Energieträgers und der aktuellen Gastemperatur ist die Überhitzung also die Regelgrösse, welche durch das Ventil 4 geregelt wird.

Im dargestellten Ausführungsbeispiel umfasst die Messeinrichtung 10 einen mit einem ersten Eingang 8e1 des ersten Moduls 8 verbundenen Drucksensor 11 und einen mit einem zweiten Eingang 8e2 des Moduls 8 verbundenen Temperatursensor 12 . Aus den Signalen des Drucksensors 11 und des Temperaturssensors 12 ist die Überhitzung in bekannter Art berechenbar. Da die Regeleinrichtung mit Vorteil einen Mikroprozessor aufweist, wird die aktuelle Überhitzung mit Vorteil im ersten Modul 8 aus Signalen der Messeinrichtung 10 berechnet. Es versteht sich von selbst, dass auch eine Variante der Messeinrichtung 10 einsetzbar ist, welche direkt ein Überhitzungssignal liefert. Bei trockener Verdampfung ist das Ventil 4 mit Vorteil ein elektrisch betätigtes Expansionsventil, beispielsweise ein Einspritzventil.

Im weiteren weist das erste Modul 8 einen Sollwerteingang 8f für eine erste Führungsgrösse F1 auf, während das zweite Modul 9 einen Sollwerteingang 9f für eine zweite Führungsgrösse F2 aufweist.

Eine innere Regelschleife der Regeleinrichtung umfasst im Wesentlichen das erste Modul 8, das Ventil 4, den Verdampfer 5 und die Messeinrichtung 10. Die Regelgrösse ist - bei trockener Verdampfung - die Überhitzung. Störungen der innere Regelschleife werden beispielsweise durch Laständerungen, durch Veränderungen der Förderleistung des Verdichters 2 oder durch Änderungen des Druckes oder der Temperatur im Verflüssiger 3 verursacht.

Das erste Modul 8 weist eine Vergleichseinrichtung zur Gewichtung der Signale an den Eingängen 8e, 8f sowie eine Korrektureinheit auf, welche in bekannter Art, beispielsweise als PID-Regler implementiert und auf die Anlage 1 abgestimmt ist. In gleicher Art weist das zweite Modul 9 eine Vergleichseinheit zur Gewichtung der Signale an den Eingängen 9e, 9f sowie eine Korrektureinheit auf, welche in bekannter Art, beispielsweise als PID-Regler implementiert und auf die Anlage 1 abgestimmt ist. Es versteht sich von selbst, dass die beiden Module 8 und 9 bei Bedarf auch in einer einzigen Baugruppe implementierbar sind und einen oder mehrere Mikroprozessoren umfassen können.

In der nachfolgend beschriebene Betrachtung wird eine Änderung der Temperatur oder des Druckes im Verflüssiger 3 nicht als Störung angesehen, sondern es wird vorausgesetzt, dass die Regeleinrichtung die Überhitzung bei einem stabilen Durchlass-Zustand des steuerbaren Ventils 4 regelt. Das erste Stellsignal S1 kann damit als unabhängige Variable betrachtet werden, welche durch den Druck im Verflüssiger 3 oder gleichermassen durch die Temperatur im Verflüssiger 3 geregelt wird. Der Durchlass des Ventils 4 kann also durch den Druck oder die Temperatur im Verflüssiger 3 geregelt werden. Eine äussere Regelschleife der Regeleinrichtung umfasst im Wesentlichen das zweite Modul 9, die Steuereinrichtung 7 und den Verflüssiger 3, wobei der Druck oder die Temperatur im Verflüssiger 3 mit Vorteil derart gesteuert wird, dass der Durchlass des Ventils 4 oder die Öffnung des Ventils relativ hoch ist, das heisst, etwa im Bereich von 90% des maximal erreichbaren Öffnungsquerschnitts oder im Bereich von 90% des maximal erreichbaren Durchlasses. Sofern der Druck beziehungsweise die Temperatur im Verflüssiger 3 derart gesteuert wird, dass der Arbeitsbereich des Ventils 4 sich stets bei relativ hohem Durchlass einstellt, ist der Druck im Verflüssiger 3 auf einem minimalen Wert, der ausreichend ist, um den Verdampfer 5 mit genügend Energieträgermedium zu versorgen. Dadurch, dass beim Auftreten von Laständerungen oder anderen Störungen der Druck oder die Temperatur im Verflüssiger 3 durch die Regeleinrichtung auf ein Minimum gehalten werden, wird der Wirkungsgrad COP der Anlage 1 auch unter Einwirkung der Störungen mindestens im eingeschwungenen Zustand maximiert.

Das erste Stellsignal S1 wird im zweiten Modul 9 zur Generierung des zweiten Stellsignals S2 verwendet, wobei die zweite Führungsgrösse F2 mit Vorteil einem relativ grossen Durchlass des Ventils 4 entspricht, was konkret etwa bei 90% der maximal erreichbaren Durchlasses ist. Mit der ersten Führungsgrösse ist die gewünschte Überhitzung einstellbar, beispielsweise eine Überhitzung von 7 K.

Wird jedoch beim thermodynamische Prozess mit überfluteter Verdampfung gearbeitet, so umfasst die Messeinrichtung 10 mit Vorteil einen Fühler zur Erfassung eines Flüssigkeitspegels im Verdampfer 5. Bei überfluteter Verdampfung wird also ein Pegelsignal von der Messeinrichtung 10 an das erste Modul 8 übertragen. Die Regelgrösse des inneren Regelkreises 8, 4, 5, 10 ist hier der Flüssigkeitspegel, der über die erste Führungsgrösse F1 einstellbar ist.

In der Fig. 2 weist die Anlage 1 zusätzlich einen Sensor 20 zur Erfassung einer Prozessgrösse eines Nutzprozesses auf. Der Sensor 20 ist mit einem dritten Eingang 8e3 des ersten Moduls 8 der Regeleinrichtung verbunden. Durch den Sensor 20 wird erreicht, dass eine Änderung im Bedarf des Energieaustausches zwischen dem Nutzprozess und der Anlage 1 in der Regeleinrichtung berücksichtigt werden kann.

Ist die Anlage 1 beispielsweise eine Kältemaschine und der Nutzprozess die Kühlung eines Raumes, dann ist der Sensor 20 beispielsweise ein im Raum angeordneter Temperaturfühler. Durch die innere Regelschleife kann das Kühlvermögen der Anlage 1 den Bedürfnissen des Raumes angepasst werden. Ist beispielsweise die vom Sensor 20 erfasste Temperatur zu niedrig, soll also die Kühlleistung erniedrigt werden, dann wird das erste Stellsignal S1 durch das erste Modul 8 derart verändert, dass der Durchlass im Ventil 4 entsprechend verkleinert wird, wodurch sich in der Anlage 1 ein angepasster Gleichgewichtszustand bei grösserer Überhitzung einstellt.

Das erste Stellsignal S1 für das Ventil 4 kann auch hier als unabhängige Variable betrachtet werden, welche durch den Druck im Verflüssiger 3 oder gleichermassen durch die Temperatur im Verflüssiger 3 geregelt wird. Falls in der Anlage 1 mehr Kälteleistung gefordert wird, wird die Überhitzung durch die innere Regelschleife erniedrigt, wobei der Durchlass des Ventils 4 tendenziell erhöht wird. In der äusseren Regelschleife - in der das erste Stellsignal S1 vom zweiten Modul 9 zur Generierung des zweiten Stellsignales S2 erfasst wird - wird der Druck oder die Temperatur im Verflüssiger 3 tendenziell erhöht. Falls in der Anlage 1 jedoch weniger Kälteleistung gefordert wird, wird in der inneren Regelschleife der Durchlass des Ventils 4 tendenziell verkleinert und in der äusseren Regelschleife wird auch der Druck oder die Temperatur im Verflüssiger 3 tendenziell erniedrigt. In beiden Fällen ist also durch die selbsttätige Einstellung des minimal erforderlichen Druckes oder der minimalen Temperatur im Verflüssiger 3 eine Maximierung des Wirkungsgrades COP der Anlage 1 erreichbar.

In einer weiteren Variante der Anlage 1 (Fig. 2) ist der Sensor 20 eine externe Signalquelle, durch welche der aktuelle Energieaustausch der Anlage 1 steuerbar ist. Es versteht sich von selbst, dass auch in dieser Variante der Anlage 1 durch die selbsttätige Einstellung des minimal erforderlichen Druckes oder der minimalen Temperatur im Verflüssiger 3 eine Maximierung des Wirkungsgrades COP der Anlage 1 erreichbar ist.

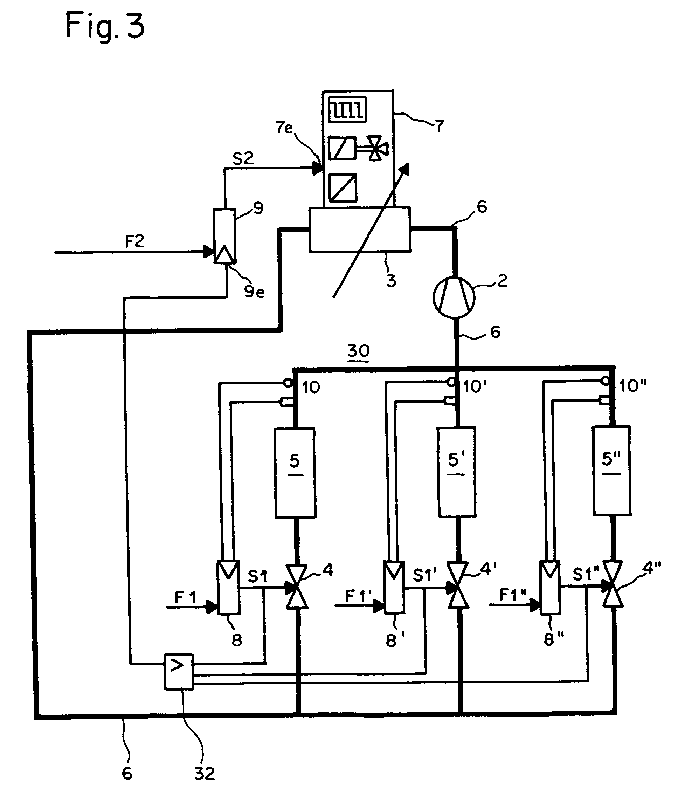

In der Fig. 3 ist mit 31 eine Variante der Anlage 1 bezeichnet, in der parallel zu einem ersten, den Verdampfer 5 und das Ventil 4 aufweisenden Strang auch ein zweiter Strang und ein dritter Strang geschaltet sind, wobei der zweite Strang einen zweiten Verdampfer 5' und ein zweites Ventil 4' und der dritte Strang einen dritten Verdampfer 5" und ein drittes Ventil 4" aufweisen.

In gleicher Weise wie das erste Ventil 4 wird das zweite Ventil 4' oder das dritte Ventil 4" durch ein gleichartiges Modul 8' bzw. 8" angesteuert. Die Regeleinrichtung der Variante 31 umfasst neben den drei Modulen 8, 8' und 8" ein Auswahleinheit 32, welche ausgangsseitig mit dem Eingang 9e des zweiten Moduls 9 verbunden ist. Die Auswahleinheit 32 weist für jedes der drei Ventile 4, 4' und 4" je einen Eingang auf, auf den das entsprechende Stellsignal S1, S1' und S1" des Ventils 4, 4' und 4" geführt ist. Die Auswahleinheit 32 wählt unter den zugeführten Stellsignalen S1, S1' und S1" nun dasjenige aus, welches den grössten Durchlass darstellt und leitet den Wert des ausgewählten Stellsignales an das zweite Modul 9 weiter. Damit wird zur Berechnung des zweiten Stellsignals S2 stets der in der Variante 32 aktuell am höchsten eingestellte Durchlass eines Ventils 4, 4' oder 4" verwendet. Damit arbeitet die Regeleinrichtung derart, dass die inneren Regelschleifen immer mit einem Druck arbeiten, der nicht so tief ist, dass einer der Verdampfer 5, 5' oder 5" ungenügend mit Energieträger beliefert wird. Andererseits arbeitet die Regeleinrichtung so, dass alle Ventile 4, 4' und 4" unter den gegebenen Bedingungen maximalen Durchlass aufweisen, so dass der bestmögliche Wirkungsgrad COP erreicht wird.

Mit einem Regelverfahren für eine Kältemaschine 1 bzw. 31 oder eine Wärmepumpe 1 bzw. 31, mit einem Verfahrensschritt, in welchem am Verdampfer 5 wenigstens eine Prozessgrösse gemessen und mit Hilfe der Prozessgrösse ein erstes Stellsignal S1 für das Ventil 4 generiert wird, und einen weiteren Verfahrensschritt, in welchem ein zweites Stellsignal S2 zur Veränderung des Druckes oder der Temperatur im Verflüssiger 3 generiert wird und zur Generierung des zweiten Stellsignals S2 das erste Stellsignal S verwendet wird, ist der Wirkungsgrad COP der Kältemaschine 1 bzw. 31 oder der Wärmepumpe 1 bzw. 31 im eingeschwungenen Zustand auch dann optimiert, wenn Störungen wie beispielsweise Laständerungen der Nutzprozesse oder Veränderungen der Förderleistung des Verdichters 2 auftreten.

## Patentansprüche

1. Verfahren zur Regelung von Grössen in einem thermodynamischen Kreisprozess in einer Anlage (1; 31) mit einem Energieträgerkreis, in der ein Verdichter (2), ein Verflüssiger (3), wenigstens ein Ventil (4; 4'; 4") und wenigstens ein Verdampfer (5; 5'; 5") hintereinander angeordnet sind,
mit einem Verfahrensschritt, in welchem am Verdampfer (5; 5'; 5") wenigstens eine Prozessgrösse gemessen und mit Hilfe der Prozessgrösse ein erstes Stellsignal (S1; S1'; S1") für das Ventil (4; 4'; 4") generiert wird,
**gekennzeichnet durch**
einen Verfahrensschritt, in welchem ein zweites Stellsignal (S2) zur Veränderung des Druckes oder der Temperatur im Verflüssiger (3) generiert wird und zur Generierung des zweiten Stellsignals (S2) das erste Stellsignal (S1; S1'; S1") verwendet wird.

2. Verfahren nach einem vorangehenden Anspruch, dadurch gekennzeichnet, dass das erste Stellsignal (S1; S1'; S1") mit Hilfe eines Überhitzungssignals (11, 12) generiert wird, welches von der Überhitzung am Verdampfer (5; 5'; 5") abhängig ist.

3. Verfahren nach einem vorangehenden Anspruch, dadurch gekennzeichnet, dass das erste Stellsignal (S1; S1'; S1") mit Hilfe eines Pegelsignals generiert wird, welches von der aktuellen Flüssigkeitsmenge im Verdampfer (5; 5'; 5") abhängig ist.

4. Verfahren nach einem vorangehenden Anspruch, dadurch gekennzeichnet,
dass das erste Stellsignal (S1; S1'; S1") derart generiert wird, dass die Überhitzung am Verdampfer (5; 5'; 5") oder die Flüssigkeitsmenge im Verdampfer (5; 5'; 5") nach einem konstanten Sollwert geregelt wird.

5. Verfahren nach einem vorangehenden Anspruch, dadurch gekennzeichnet,
dass der Druck oder die Temperatur im Verflüssiger (3) durch eine Veränderung der Kühlung am Verflüssiger (3) verändert wird.

6. Verfahren nach einem vorangehenden Anspruch, dadurch gekennzeichnet,
dass der Druck oder die Temperatur im Verflüssiger (3) durch das zweite Stellsignal derart geregelt wird, dass das Ventil (4; 4'; 4") in einem Arbeitsbereich regelbar ist, bei dem das Ventil (4; 4'; 4") relativ weit geöffnet ist.

7. Verfahren nach einem vorangehenden Anspruch, dadurch gekennzeichnet,
dass die Führungsgrösse für das erste Stellsignal (S1; S1'; S1") von einer Prozessgrösse (20) eines Nutzprozesses abhängig ist, dessen Temperatur vom thermodynamischen Kreisprozess abhängig ist.

8. Verfahren nach einem vorangehenden Anspruch, dadurch gekennzeichnet,
dass bei einer Anlage (1; 30) mit mehreren Ventilen (4; 4'; 4") das zweiten Stellsignal (S2) zur Veränderung des Druckes oder der Temperatur im Verflüssiger (3) mit Hilfe des ersten Stellsignales (S1; S1'; S1") desjenigen Ventils (4; 4'; 4") gebildet wird, welches aktuell den grössten Durchlass bzw. die grösste Öffnung aufweist.

9. Regeleinrichtung zur Durchführung eines Verfahrens nach einem der Ansprüche 1 bis 8, an einer Anlage, in der ein thermodynamischer Kreisprozess durchführbar ist und welche einen Energieträgerkreis aufweist, in dem ein Verdichter (2), ein Verflüssiger (3), wenigstens ein Ventil (4; 4'; 4") und wenigstens ein Verdampfer (5; 5'; 5") hintereinander angeordnet sind,
mit ersten Mitteln (10, 8), durch welche aus einer Führungsgrösse (F1) und wenigstens einer Messgrösse (10) ein erstes Stellsignal (S1) für das Ventil (4) generierbar ist,
**gekennzeichnet durch** zweite Mittel (9), durch welche unter Verwendung des ersten Stellsignales (S1) ein zweites Stellsignal (S2) zur Veränderung des Druckes oder der Temperatur im Verflüssiger (3) generierbar ist.

10. Anlage mit einem Energieträgerkreis zur Durchführung eines thermodynamischen Kreisprozesses, in der ein Verdichter, ein Verflüssiger, wenigstens ein Ventil und wenigstens ein Verdampfer hintereinander angeordnet sind, mit einem ersten Regelkreis (10, 8, 4), durch den eine Prozessgrösse am Verdampfer (5) durch ein erstes Stellsignal (S1) zur Verstellung des Durchlasses bzw. der Öffnung des Ventils (4) regelbar ist,
**gekennzeichnet durch** einen zweiten Regelkreis (S1, 9, S2, 7), in dem das erste Stellsignal (S1) erfasst und mit Hilfe des ersten Stellsignals (S1) ein zweites Stellsignal (S2) generiert wird, durch welches der Druck oder die Temperatur im Verflüssiger (3) veränderbar ist.
